# EUROPÄISCHE PATENTSCHRIFT

(11) **EP 0 424 673 B1**
(45) Veröffentlichungstag und Bekanntmachung des Hinweises auf die Patenterteilung: **09.03.1994**
(21) Anmeldenummer: 90118171.9
(22) Anmeldetag: 21.09.1990
(51) Int. Cl.: C25D 1/14, B28B 1/26, H01M 10/39, C04B 35/10

(54) **Verfahren zur Herstellung eines keramischen Formkörpers**
Process for the production of a shaped ceramic product
Procédé pour la production d'un produit céramique mis en forme

(30) Priorität: 26.09.1989 DE 3932037
(43) Veröffentlichungstag der Anmeldung: 02.05.1991
(73) Patentinhaber: Asea Brown Boveri Aktiengesellschaft, 68309 Mannheim (DE)
(72) Erfinder: Schuh, Lothar, Dr., W-6940 Weinheim (DE); Harbach, Friedrich, Dr., W-6900 Heidelberg 1 (DE); Nienburg, Hans, Dr., W-6900 Heidelberg (DE)
(74) Vertreter: Rupprecht, Klaus, Dipl.-Ing.

(56) Entgegenhaltungen:
- EP-A- 0 324 972
- CA-A- 945 511
- GB-A- 843 102

## Beschreibung

Die Erfindung bezieht sich auf ein Verfahren zur Herstellung eines keramischen Formkörpers nach dem Oberbegriff des Anspruchs 1.

Ein solches Verfahren ist aus der DE-OS 38 01 328 bekannt und wird beispielsweise zur Herstellung von Formkörpern aus einer ionenleitenden Keramik benutzt. Eine typische Anwendung ist die Herstellung von Festelektrolytkörpern für Natrium/Schwefel-Zellen in Hochenergiebatterien zur Speicherung elektrischer Energie.

Das bekannte Verfahren zur naßchemischen Formgebung durch elektrophoretische Abscheidung aus einer Suspension, das auch im Rahmen der Erfindung zur Anwendung kommt, erfordert eine hochpolierte elektrisch leitende Hohlelektrode, in welche die Suspension eingefüllt wird, und einen Dorn, der als Gegenelektrode in die Suspension eintaucht.

Die Suspension wird bevorzugt nach einem chemischen Dispergierverfahren unter Verwendung von keramischem Pulver und einer Kombination von Dispersionsmittel und Dispergiermittel hergestellt.

Die Suspension wird in die Hohlelektrode gegeben, der Dorn eingetaucht und die elektrophoretische Abscheidung an der Innenseite der Hohlelektrode durchgeführt. Nach ausreichender Trocknung wird ein so hergestellter Grünkörper aus der Hohlelektrode genommen und anschließend zur Fertigstellung des Formkörpers gesintert.

Nach dem bekannten Verfahren lassen sich beidseitig offene oder einseitig geschlossene, zylindrische oder leicht konisch geformte Formkörper herstellen. Es wird dazu eine in entsprechender Weise geformte Hohlelektrode aus Edelstahl benutzt, wobei die Fläche, auf der der Formkörper abgeschieden wird, hochpoliert ausgeführt ist, wenn glatte Formkörper gewünscht werden.

Die Trennung eines Grünkörpers von der Hohlelektrode ist sehr einfach möglich, da der Grünkörper nach der Abscheidung während des Trocknungsvorgangs schrumpft und sich von der Wandung der Hohlelektrode ablöst. Der keramische Grünkörper kann dann aus der Hohlelektrode herausgenommen werden.

Komplizierter geformte Formkörper, deren maximaler Durchmesser größer ist als die Öffnung der Hohlelektrode lassen sich nach dem bekannten Verfahren allerdings nicht herstellen. Derartige Formkörper können beispielsweise wünschenswert sein aufgrund von Leistungsanforderungen an Batterien, welche unter Verwendung solcher Formkörper hergestellt werden, oder aufgrund von sonstigen Formvorgaben.

Der Erfindung liegt daher die Aufgabe zugrunde, ein verbessertes Verfahren anzugeben.

Diese Aufgabe wird gelöst durch ein Verfahren zur Herstellung eines keramischen Formkörpers durch nasse Formgebung, wobei
a) eine Suspension aus kleinen, elektrisch geladenen keramischen Teilchen hergestellt wird,
b) die Suspension in eine Hohlelektrode dekantiert wird und in die Suspension ein Dorn als Gegenelektrode getaucht ist,

- in dieser Anordnung eine elektrophoretische Abscheidung der keramischen Teilchen an der Innenseite der Hohlelektrode durch Anlegen einer Gleichspannung an die Elektroden durchgeführt wird,
- der sich an der Hohlelektrode bildende Niederschlag getrocknet wird, so daß ein keramischer Grünkörper entsteht,
- der Grünkörper von der Elektrode entfernt und anschließend zu einem dichten Formkörper gesintert wird,
und wobei eine hochpolierte Hohlelektrode verwendet wird, die aus dichtem Kohlenstoff hergestellt wird und eine geringe Oberflächenrauhigkeit des darauf abgeschiedenen Formkörpers gewährleistet, und wobei diese Hohlelektrode nach dem Trocknungsvorgang durch Wegbrennen vom Grünkörper entfernt wird.

Der vorgeschlagene Werkstoff für die Hohlelektrode ist ein guter elektrischer Leiter, ist inert gegen die verwendete Suspension und ist leicht in die entsprechende Form zu bringen.

Es wäre denkbar, anstelle der vorgeschlagenen einstückigen Hohlelektrode auch zusammengesetzte Formteile, z. B. aus Edelstahl zu verwenden. Zusammengesetzte Hohlelektroden hätten aber den Nachteil, daß sie Nahtabdrücke an den Grünkörpern hinterlassen können, welche dann Schwachstellen der Keramik bilden, von denen durch Rissbildung eine mechanische Zerstörung ausgehen kann. Nach dem erfindungsgemäßen Verfahren hergestellte und gesinterte keramische Formkörper zeichnen sich dagegen durch besonders hohe mechanische Stabilität aus.

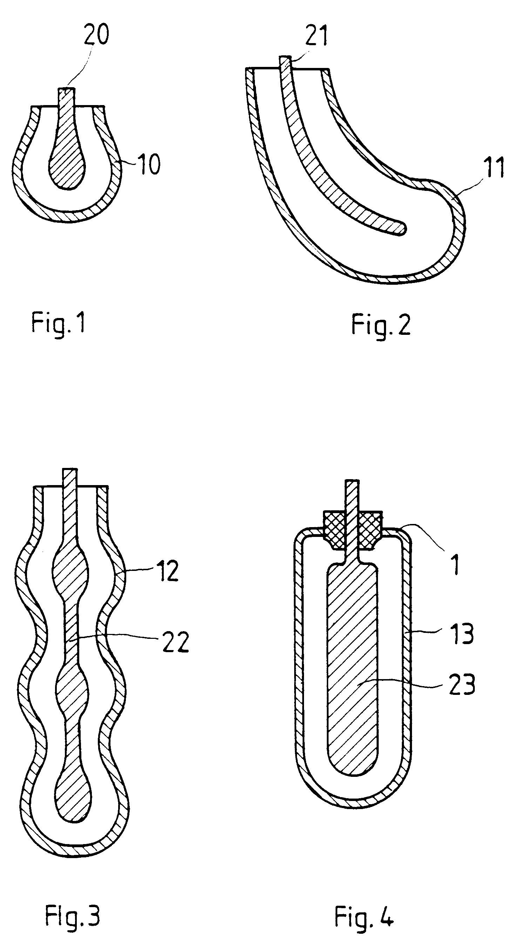

In der Zeichnung sind in den Figuren 1 bis 4 beispielhaft Elektrodenanordnungen dargestellt, welche zur Durchführung des erfindungsgemäßen Verfahrens verwendet werden können.

Fig. 1 zeigt eine kolbenförmige Hohlelektrode 10 und eine daran angepaßte Gegenelektrode 20. Fig. 2 zeigt eine gebogene Hohlelektrode 11 und eine zugehörige Gegenelektrode 21. Fig. 3 zeigt eine Hohlelektrode 12 und eine angepaßte Gegenelektrode 22 mit in axialer Richtung variierendem Durchmesser. Fig. 4 zeigt eine Hohlelektrode 13 mit einem oben umgreifenden Rand 1 und einer angepaßten Gegenelektrode 23.

Die Gegenelektrode 20 bis 23 kann in allen Fällen aus V2A-Stahl hergestellt werden. Als Hohlelektrode 10 bis 13 wird eine wegbrennbare Kohleelektrode verwendet.

Nachstehend wird als Ausführungsbeispiel die Herstellung eines Formkörpers aus Alpha-Aluminiumoxid beschrieben, wobei eine abbrennbare Kohleelektrode verwendet wird.

Zur Herstellung einer stabilen Suspension werden 1,4 Gew.-% Polyacrylsäure (bezogen auf Alpha-Al₂O₃) unter Rühren in Ethanol gelöst und dann werden unter Rühren 50 Gew.-% Alpha-Al₂O₃ (bezogen auf den Gesamtansatz) darin suspendiert. Anschließend wird der Ansatz unter Rühren und Kühlen mit Ultraschall beschallt.

Die so hergestellte und vorsedimentierte Suspension wird in eine Hohlelektrode aus Kohlenstoff eingefüllt.

Die Herstellung eines Formkörpers als Grünkörper durch Abscheidung von keramischem Pulver aus der stabilen Suspension an der Innenseite einer Hohlelektrode findet bei Feldstärken von etwa 17 Vcm⁻¹ und 1 mA Stromstärke statt. Als Gegenelektrode dient ein komplementär zur Hohlelektrode geformter Körper aus V2A-Stahl.

Nach dem Abscheidungsvorgang, d. h. wenn die Wandstärke des Grünkörpers genügend dick ist, wird die Elektrophorese gestoppt und die verbleibende Suspension aus der Hohlelektrode ausgegossen.

Die Anordnung wird zunächst an Luft vorgetrocknet und dann langsam im Ofen auf eine Temperatur von etwa 700°C gebracht. Dabei verbrennt die den Grünkörper umgebende Hohlelektrode aus Kohlenstoff rückstandslos. Nach etwa 1 Stunde Haltezeit bei der genannten Temperatur kann der Formkörper dann bis zur Sintertemperatur zwischen 1400°C und 1600°C aufgeheizt werden.

## Patentansprüche

1. Verfahren zur Herstellung eines keramischen Formkörpers durch nasse Formgebung, wobei
a) eine Suspension aus kleinen, elektrisch geladenen keramischen Teilchen hergestellt wird,
b) die Suspension in eine Hohlelektrode dekantiert wird und in die Suspension ein Dorn als Gegenelektrode getaucht ist,
- in dieser Anordnung eine elektrophoretische Abscheidung der keramischen Teilchen an der Innenseite der Hohlelektrode durch Anlegen einer Gleichspannung an die Elektroden durchgeführt wird,
- der sich an der Hohlelektrode bildende Niederschlag getrocknet wird, so daß ein keramischer Grünkörper entsteht,
- der Grünkörper von der Elektrode entfernt und anschließend zu einem dichten Formkörper gesintert wird,
dadurch gekennzeichnet, daß eine hochpolierte Hohlelektrode verwendet wird, die aus dichtem Kohlenstoff hergestellt wird und eine geringe Oberflächenrauhigkeit des darauf abgeschiedenen Formkörpers gewährleistet, und daß diese Hohlelektrode nach dem Trocknungsvorgang durch Wegbrennen vom Grünkörper entfernt wird.

2. Verfahren nach Anspruch 1, dadurch gekennzeichnet, daß ein Keramikpulver zur Herstellung der Suspension verwendet wird.

## Claims

1. Process for producing a ceramic moulding by wet shaping, in which
a) a suspension composed of small, electrically charged ceramic particles is produced,
b) the suspension is decanted into a hollow electrode and a mandrel is immersed in the suspension as counterelectrode,
- an electrophoretic deposition of the ceramic particles on the inside of the hollow electrode is carried out in this arrangement by applying a direct voltage to the electrodes,
- the deposit which forms on the hollow electrode is dried, thereby producing a ceramic green body,
- the green body is removed from the electrode and is than sintered to form a dense moulding,
characterized in that a highly polished hollow electrode is used which is produced from dense carbon and ensures a low surface roughness of the moulding deposited thereon, and in that said hollow electrode is removed after the drying process by burning it off from the green body.

2. Process according to Claim 1, characterized in that a ceramic powder is used to produce the suspension.

## Revendications

1. Procédé de fabrication d'un corps moulé en céramique par mise en forme à l'état humide, procédé dans lequel
a) on réalise une suspension de particules de céramiques de petite dimension chargées électriquement,
b) on fait décanter la solution dans une électrode creuse et on plonge dans la suspension un noyau formant contre-électrode,
- dans cette installation, on réalise un dépôt par électrophorèse des particules de céramique sur la face intérieure de l'électrode creuse en appliquant une tension continue aux électrodes,
- on sèche le dépôt qui se forme sur l'électrode creuse de manière à obtenir une ébauche en céramique,
- on retire l'ébauche de l'électrode et on la fritte pour former un corps moulé dense,
caractérisé par le fait que l'on utilise une électrode creuse à poli de haute qualité qui est fabriquée à partir de carbone dense et garantit une faible porosité superficielle du corps moulé déposé sur celle-ci et par le fait qu'après séchage, on élimine par combustion l'électrode creuse.

2. Procédé selon la revendication 1, caractérisé par le que l'on utilise une poudre de céramique pour réaliser la suspension.
